# EUROPEAN PATENT APPLICATION

(11) **EP 1 844 963 A1**
(43) Date of publication of application: **17.10.2007**
(21) Application number: 07106041.2
(22) Date of filing: 12.04.2007
(51) Int. Cl.: B60G 21/055, F16F 1/16

(54) **Vehicle stabilizer bar bushing assembly**

(30) Priority: 13.04.2006 US 791797 P; 05.02.2007 US 702314
(71) Applicant: THE GOODYEAR TIRE & RUBBER COMPANY, Akron, Ohio 44316-0001 (US)
(72) Inventor: Plante, Martin Joseph, Quebec Québec PQ, G1C 7N9 (CA)
(74) Representative: Kutsch, Bernd

(57) **Abstract**

A vehicle stabilizer bar bushing assembly has an elastomeric bushing (16) and a bushing liner (18). The bushing liner (18) is internal to the bushing (16) and is not bonded to the bushing prior to be assembled onto the vehicle stabilizer bar (10). Both the bushing and the bushing liner have ledges (22, 24) at the opposing edges of the structures, to limit movement of the bushing (16) underneath a mounting bracket (14) and to limit movement of the bushing over the bushing liner. The bushing liner (18) is formed of a polymeric material having a relatively low coefficient of friction and is flexible to permit formation of non-linear configurations of the bushing liner.

## Description

### Field of the Invention

The present invention is directed to a bushing for a vehicle stabilizer bar. More specifically, the present invention is directed to an improvement for a bushing assembly.

### Background of the Invention

In automotive vehicles, a stabilizer bar is connected to the right and left wheel assemblies of a vehicle to assist in keeping the vehicle level. Typically, at least one metal bracket, positioned between the ends of the stabilizer bar, secures the stabilizer bar to a structural component of the vehicle. A rubber bushing is positioned between the stabilizer bar and the metal bracket to limit axial and radial movement of the stabilizer bar relative to the bracket. The rubber bushing also dampens the stabilizer bar movements.

Conventional design of the vehicle suspension system permits rotation between the stabilizer bar and the bushing. However, slippage between the stabilizer bar and the bushing can create a slip-stick phenomenon between the metal and rubber materials, and may result in an audible noise, noticeable by the driver. To reduce the coefficient of friction between the stabilizer bar and the bushing, it has been known to provide the inner side of the bushing with a self-lubricating rubber or a secured liner or internal layer of polytetrafluoroethylene (PTFE) which is mostly commonly known as Teflon, high molecular weight polyethylene, or polyester.

However, with a self-lubricating material, the coefficient of friction varies over temperature ranges, during bushing degradation, and with road contaminants. Teflon lined bushings may also delaminate during bushing degradation, reducing its effectiveness.

Another concern in regards to stabilizer bars and bushings arises from the various configurations for stabilizer bars. The configuration of a stabilizer bar will typically include several bends; the exact configuration of the stabilizer bar is specific to the vehicle platform as it is configured to go around other features of the vehicle undercarriage. Because of the bends and variations of both the stabilizer bar and the vehicle undercarriage, which dictates where a bushing can be mounted, there may arise vehicle platforms where the bushing must be mounted where there is a bend in the stabilizer bar. Thus the bushing assembly, and the components thereof, must be flexible to accommodate the bar and permit the desired movement between the stabilizer bar and the bushing assembly.

### Summary of the Invention

The present invention is directed to a stabilizer bar bushing assembly wherein the assembly includes an internal component that provides both a low coefficient of friction between the component and the stabilizer bar and is flexible to permit movement along bends of the stabilizer bar.

The present invention is a vehicle stabilizer bar mounting assembly according to claim 1. The assembly has a retaining bracket, an elastomeric bushing, and a bushing liner. The bushing liner is internal to the bushing and the bracket is secured over an external surface of the bushing. The bushing has a generally torodial shape between a pair of opposing ends, a constant internal diameter, and ledges at the opposing ends. The bushing liner has a length greater than the bushing, a pair of opposing ends, liner ledges at the opposing ends, and is formed from a non-elastomeric material. When assembled, the liner ledges of the bushing liner extend past the ledges of the bushing and the liner ledges have an external diameter greater than the internal bushing diameter, and the bushing liner is not bonded to the bushing.

In one aspect of the invention, the bushing liner is formed from a polymeric material having a coefficient of friction less than the coefficient of friction of the elastomer forming the bushing.

In another aspect of the invention, the bushing liner is formed from a flexible material capable of being formed into non-linear configurations.

In another aspect of the invention, the mounting bracket has an internal radius and the bushing ledges have an external radius greater than the mounting bracket internal radius.

In another aspect of the invention, the mounting bracket has an internal radius and the bushing has a central compression area having an external diameter, the external diameter of the compression area being greater than the twice the internal radius of the mounting bracket.

In another aspect of the invention, the bushing and the bushing liner have corresponding non-linear configurations. In such an embodiment, the mounting bracket may have a pair of securing arms, each arm having first and second ends, wherein the first ends of the arms having a mounting means located therein, and the second ends of the arms are joined to each other.

### Brief Description of the Drawings

The invention will be described by way of example and with reference to the accompanying drawings in which:
FIG. 1 is a stabilizer bar and a mounting assembly for the bar;
FIG. 2 is a cross sectional view along section line 2-2 of FIG. 1;
FIG. 3 is a perspective view of the bushing, liner, and stabilizer bar;
FIG. 4 is an alternative embodiment of a stabilizer bar and mounting assembly;
FIG. 5 is an embodiment of the liner; and
FIG. 6 is an alternative embodiment of the bushing, liner, and stabilizer bar.

### Detailed Description of the Invention

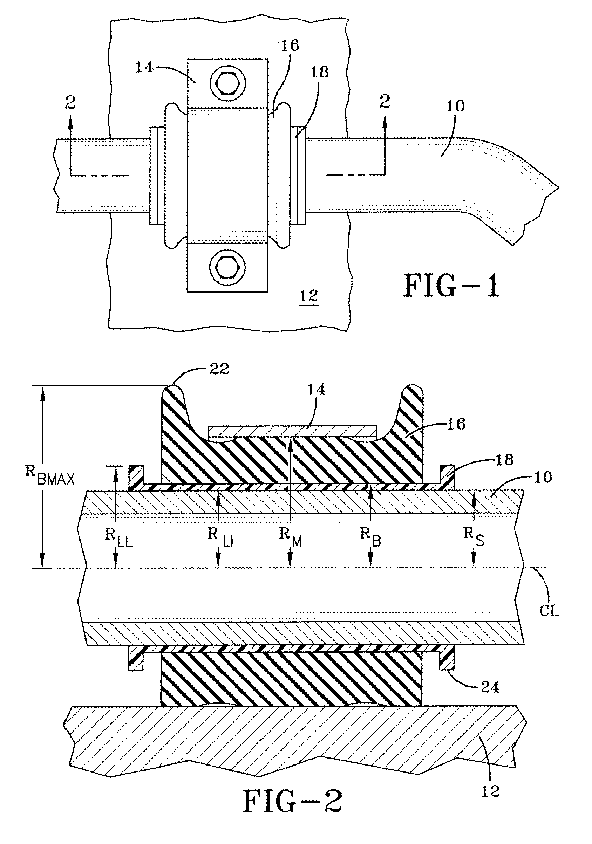

FIGS. 1 and 2 illustrate a portion of a vehicle stabilizer bar 10 secured to a vehicle chassis or frame 12 by means of mounting assembly including a generally U-shaped metal retaining bracket 14. The mounting bracket 14 is secured on both sides of the stabilizer bar to the vehicle chassis 12.

The mounting assembly includes a bar bushing 16 and a bushing liner 18. The bar bushing 16 has a generally torodial shape and a slit along the length of the bushing 16 so that the bushing 16 may be mounted onto the stabilizer bar 10. The bushing 16 preferably has a constant internal radius R_{B} and a varying external configuration. The constant internal bushing radius R_{B} is greater than the outer radius R_{S} of the stabilizer bar 10 by preferably not more than 5 mm, more preferably not more than 3 mm. Radius values of the stabilizer bar 10 and elements of the mounting assembly are measured relative to the centerline CL of the stabilizer bar 10, which corresponds to the centerline of the bushing 16 and liner 18.

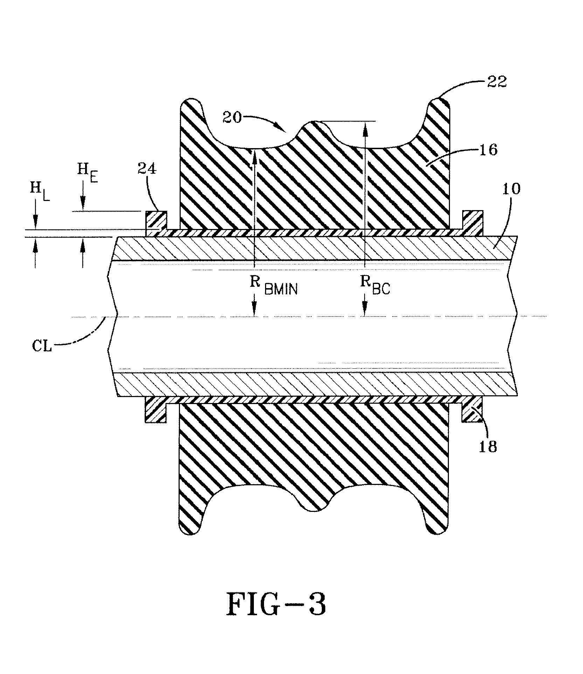

The external configuration of the bushing 16 has a central compression area 20 and ledges 22 at the opposing ends of the bushing 16, see FIG. 3. The central compression area 20 includes an area having a radius R_{BC} greater than the minimum radius R_{BMIN} of the external configuration. At least a portion of the central compression area has a radius R_{BC} greater than the radius R_{M} created by the mounting bracket. While the compression area 20 is illustrated as a single, hill-like projection, the external configuration of the compression area 20 is not limited to the illustrated design and may be formed with multiple projections or even have grooves therein. When provided with ledges, the ledges 22 at the bushing ends have a radius R_{BMAX} greater than the internal radius R_{M} of the mounting bracket. The ledges 22 prevent the bushing 16 from moving out from under the metal bracket 14.

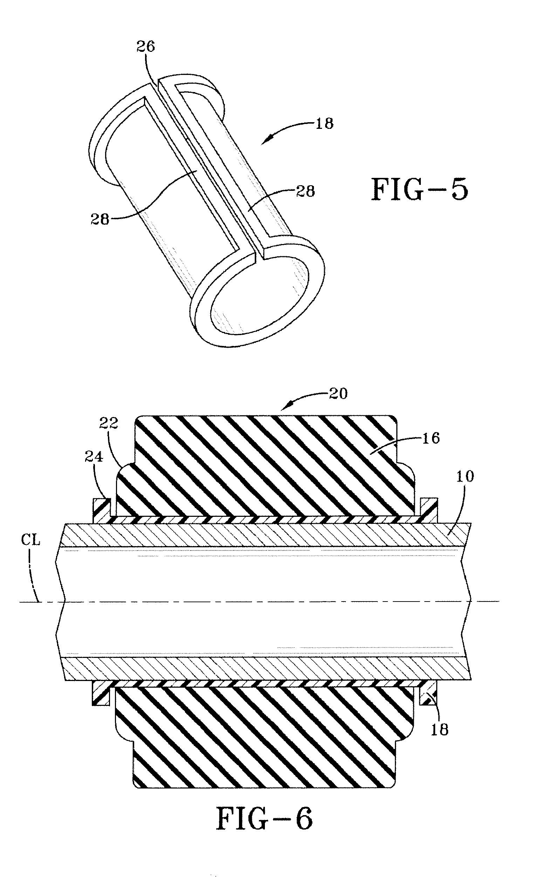

Internal to the bushing 16 is a bushing liner 18. The bushing liner 18 has a defined length with a generally hose-like configuration and ledges 24 at the opposing ends of the liner 18. Similar to the bushing 16, the liner 18 has a slit 26 to permit application of the liner onto the stabilizer bar 10, see FIG. 5. The liner 18 has a length greater than the bushing 16 wherein, when the bushing 16 is positioned over the liner 18, the bushing 16 is located between the opposing liner ledges 24. The liner ledges 24 have a height HE in range of 2 to 10 times the thickness H_{L} of the central portion of the liner 18. The liner 18 preferably has a constant internal radius R_{LI} corresponding to not more than 1 mm, preferably not more than 3 mm greater than the stabilizer bar external diameter. The central external radius of the liner 18 corresponds to the internal radius R_{B} of the bushing 16 within conventional engineering tolerances but also may be greater than R_{B} to create interference and a tighter fit to the assembly. Along the slit 26 of the liner 18, the slit creates a pair of opposing longitudinal edges. At each longitudinal edge, a rib 28 may be provided, the ribs 28 may or may not have a height the same as the ledges 24. When the liner 18 is provided with the ribs 28, it creates an enclosed channel for the bushing 16 to sit in and assists in alignment of the bushing 16 on the liner 18.

The liner 18 is formed of a polymeric material having a low coefficient of friction and excellent abrasion resistance between the stabilizer bar 10 and the bushing 16. The coefficient of friction for the liner 18 is less than the coefficient of friction of the elastomer forming the bushing 16, the coefficients being that of friction against metal. Additionally, the liner 18 is formed of a flexible material to permit forming the liner 18 with a longitudinal shape other than strictly the straight shape that is currently illustrated; i.e. non-linear configurations.

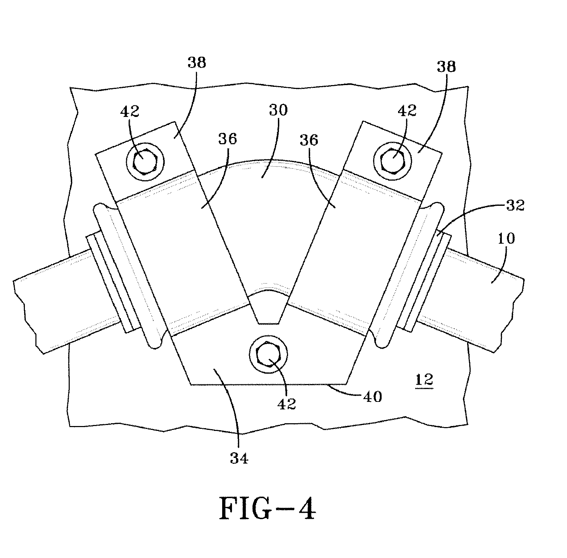

The material used for the liner permits the liner 18 to be formed with a variety of bent configurations so that the bushing assembly may also be used to mount the stabilizer bar 10 to the vehicle frame 12 along a bent portion of the bar 10. One example of a bent bushing and liner is illustrated in FIG. 4. The bushing 30 and liner 32 have a bent configuration corresponding to a bend in the stabilizer bar 10. The bracket 34 securing the bar and bushing assembly to the vehicle frame 12 has a split configuration wherein each leg of the bend of the bushing assembly is individually secured to the vehicle frame 12. The bracket 34 has a U shaped configuration wherein one side of the U shape is split to create a V shape configuration. The bracket 34 has a pair of securing arms 36, each arm 36 having two first and second ends 38, 40. At the first end 38 of each securing arm 36 there is a mounting means 42 for attaching the bracket 34 to the frame 12. The second ends 40 the arms 36 are joined together to form a single mounting area with at least one mounting means 42. To further secure the location of the bushing 30, in addition to the ledges at the opposing ends of the bushing 30, there may be ledges located along the length of the bushing 30 so that each mounting bracket arm 36 is located between a pair of ledges.

Alternatively, with a bent stabilizer bar 10, a straight bushing 30 and liner 18 may be located just on one arm of the bend of the bar. Another embodiment for the assembly that may be used with both a straight or bent stabilizer bar is shown in FIG. 6. The bushing 16 has a raised central compression area 20 and the ledges 22 at the opposing ends have a reduced height in comparison to the central compression area 20. The radius of the raised compression area is greater than the radius R_{M} created by the mounting bracket.

Suitable, and preferred, materials of construction for the liner 18 include an ultra high molecular weight polyethylene.

Following manufacture of the bushing 16 and the liner 18, and even during assembly of the bushing assembly on the stabilizer bar, the liner 18 is maintained as a separate element from the bushing 16; i.e. the liner is not bonded or adhesively secured to the bushing. In preparing the bushing assembly, the bushing 16 may be affixed to the liner 18 and then the assembly mounted onto the stabilizer bar 10 or the liner 18 may first be mounted on the stabilizer bar 10 and the bushing 16 is mounted onto the liner.

By the use of the above described liner and bushing combination, the busing assembly has improved durability due to reduced abrasion between the bushing and the bar and reduced wear of the internal side of the bushing as the bushing no longer rubs against the metal stabilizer bar. Also, friction noise between the bushing and bar is eliminated due to the elimination of contact between the rubber bushing and the metal stabilizer bar.

## Claims

1. A vehicle stabilizer bar mounting assembly, the assembly comprising a retaining bracket (14), an elastomeric bushing (16), and a bushing liner (18), the bushing liner (18) being internal to the bushing (16) and the bracket (14) being secured over an external surface of the bushing (16), the assembly being **characterized by**
the bushing (16) having a generally torodial shape between a pair of opposing ends, a constant internal diameter, and ledges (22) at the opposing ends, and
the bushing liner (18) having a length greater than the bushing (16), a pair of opposing ends, liner ledges (24) at the opposing ends, and is formed from a non-elastomeric material,
wherein, in the assembly, the liner ledges (24) of the bushing liner (18) extend past the ledges (22) of the bushing (16) and the liner ledges (24) have an external diameter greater than the internal bushing diameter, and wherein the bushing liner (18) is not bonded to the bushing (16).

2. The mounting assembly of claim 1 wherein the bushing liner (18) is formed from a polymeric material having a coefficient of friction less than the coefficient of friction of the elastomer forming the bushing (16).

3. The mounting assembly of claim 1 or 2 wherein the bushing liner (18) is formed from a flexible material capable of being formed into non-linear configurations.

4. The mounting assembly of any of the preceding claims wherein the mounting bracket (14) has an internal radius and the bushing ledges (22) have an external radius greater than the mounting bracket internal radius.

5. The mounting assembly of any of the preceding claims wherein the mounting bracket (14) has an internal radius and the bushing (16) has a central compression area (20) having an external diameter, the external diameter of the compression area (20) being greater than two times the internal radius of the mounting bracket (14).

6. The mounting assembly of any of the preceding claims wherein the bushing (16) and the bushing liner (18) have corresponding non-linear configurations.

7. The mounting assembly of any of the preceding claims wherein the liner (18) is formed from ultra high molecular weight polyethylene.

8. The mounting assembly of any of the preceding claims wherein the liner (18) has a slit (26) along the length thereof, the slit (26) forming a pair of opposing edges along the length of the liner (18), wherein a rib (28) extends along the length of each opposing edge.

9. A vehicle stabilizer bar mounting assembly, the assembly comprising a retaining bracket (14), an elastomeric bushing (16), and a bushing liner (18), the bushing liner being internal to the bushing and the bracket being secured over an external surface of the bushing, the assembly being **characterized by**
the bushing (16) having a generally torodial shape between a pair of opposing ends, and a constant internal diameter, and
the bushing liner (18) having a length greater than the bushing (16), a pair of opposing ends, and is formed from a non-elastomeric material, and
wherein the bushing liner (18) is not bonded to the bushing (16) and is formed of ultra high molecular weight polyethylene.
